# EUROPEAN PATENT SPECIFICATION

(11) **EP 3 533 335 B1**
(45) Date of publication and mention of the grant of the patent: **03.02.2021**
(21) Application number: 18210931.4
(22) Date of filing: 07.12.2018
(51) Int. Cl.: A23G 1/54, A23G 3/34

(54) **PROCESS FOR PRINTING PLASTIC FOIL WITH EDIBLE INK**
VERFAHREN ZUM BEDRUCKEN VON KUNSTSTOFFFOLIE MIT ESSBARER TINTE
PROCÉDÉ D'IMPRESSION DE FEUILLES EN PLASTIQUE À L'AIDE D'ENCRE COMESTIBLE

(30) Priority: 08.12.2017 BE 201705918
(43) Date of publication of application: 04.09.2019
(73) Proprietor: Saverde BV, 8770 Ingelmunster (BE)
(72) Inventor: Verschoore, Steve, 8780 Ingelmunster (BE)
(74) Representative: Ostyn, Frans

(56) References cited:
- WO-A1-2007/051797
- WO-A1-2011/149777
- BE-A3- 1 018 215
- DE-U1- 29 805 999
- GB-A- 2 397 276
- JP-A- 2005 137 282
- KR-A- 20140 062 975
- US-A1- 2003 097 949
- US-A1- 2010 221 399
- US-A1- 2010 313 774
- US-A1- 2012 114 802

## Description

### FIELD OF THE INVENTION

Methods are provided herein for printing of chocolate with food grade ink.

### BACKGROUND OF THE INVENTION

Decoration of food products such as sweets and chocolate to make these products attractive for consumers or to use them for advertising purposes is well known. Nowadays there are also all kinds of methods and equipment for producing these decorated food products. A food product may for example be printed by means of a transfer printing film with a desired image, pattern and/or text by a transfer printing process, or the desired image, pattern and/or text may also be printed directly on the surface of the food product by means of an inkjet printer that comprises one or more ink cartridges filled with edible ink or by a screen-printing process.

The increased demand for high-quality decorated food products as well as the increased level of detail and colour shades of the desired images, patterns and/or text means there is a greater need for improved, quicker and more accurate methods and equipment for decorating food products, suitable for production on an industrial scale. BE 1018215 A3 describes a method for printing of chocolate with food grade ink, wherein a plastic film is provided, a surface of said plastic film is printed with food grade ink, with the food grade ink being suitable for the printing of chocolate, and wherein the printed plastic film is used for the printing of chocolate by transfer printing.

### SUMMARY OF THE INVENTION

The present invention provides a solution for one or more of the aforementioned challenges.

The present invention provides a solution for one or more of the aforementioned challenges. The present inventors found that treating plastic film with plasma improves the performance of screen printing and/or transfer printing with edible ink and allows automation thereof. Plasma modification provides adhesion between the plastic film and the edible ink that makes it possible to obtain good-quality, quick-drying printing with high resolution on the plastic film by screen printing, but also allows much quicker transfer printing on a food product such as chocolate, without leaving residues of edible ink on the plastic film. The adhesion between the plastic film and the edible ink is high enough to reduce the adherence of sheets of plastic film to each other after printing and stacking and/or rolling-up the sheets of plastic film, but on the other hand also makes it possible to print a food product such as chocolate by transfer printing without residues of edible ink remaining on the plastic film. There is thus complete transfer of the printing from the plastic film onto the food product.

Furthermore, the present inventors also found that plasma modification of the plastic film gives a wider spectrum of edible inks (e.g. ranging from very liquid to more viscous inks) for transfer printing, so that the print quality improves. For example, it is possible to print with ink formulations that have difficult wetting with an unmodified plastic film, which have a higher concentration of higher fatty acids, which have a higher concentration of titanium dioxide, which have a lower viscosity and/or which have quicker drying times/solidification times (i.e. drying of the ink holds back the crystallization, and thus the solidification, of the ink formulation).

The present invention relates to a method for the printing of chocolate with food grade ink (edible ink suitable for food), comprising the steps of
a) treating a surface of plastic film with plasma;
b) printing the plasma-treated surface of said plastic film with food grade ink; and
c) optionally drying the printed plastic film,
wherein the food grade ink is suitable for the printing of chocolate,
and wherein the printed plastic film is used for the printing of chocolate by transfer printing. In particular embodiments of the method as described herein, the surface tension of the plastic film is increased or reduced by at least 5.0%, preferably at least 10.0%, by treating a surface of said plastic film with plasma.

In particular embodiments of the method as described herein, printing of the plasma-treated plastic film with food grade ink takes place by screen printing.

In particular embodiments of the methods as described herein, the method comprises transferring a print of food grade ink from the printed plastic film onto chocolate by heating the chocolate and/or the printed plastic film.

In particular embodiments, the method as described herein comprises the steps of
a) bringing chocolate with a temperature of at least 28.0°C into contact with the printed plastic film,
b) optionally cooling the chocolate, and
c) removing the printed plastic film from the chocolate so that the print of food grade ink is released from the printed plastic film and remains on the chocolate.

In particular embodiments of the method as described herein, said plasma is atmospheric plasma.

In particular embodiments of the method as described herein, said plasma is N₂ plasma, when the plasma treatment lowers the surface tension of the plastic film; or said plasma is O₂ plasma, when the plasma treatment increases the surface tension of the plastic film.

In particular embodiments of the method as described herein, said plastic film consists of low-density polyethylene (LDPE) and/or polyethylene terephthalate (PET).

In particular embodiments of the method as described herein, the plasma treatment lowers the surface tension of the plastic film, preferably to a surface tension of at most 32.0 mN/m; or the plasma treatment increases the surface tension of the plastic film, preferably to a surface tension of at least 46.0 mN/m.

In particular embodiments of the method as described herein, said food grade ink comprises from 15.0 wt% to 65.0 wt% of fats and/or oils, wherein the fat/oil ratio is at least 2, preferably at least 4, when the plasma treatment lowers the surface tension of the plastic film; or wherein the fat/oil ratio is at most 0.45, preferably at most 0.25, when the plasma treatment increases the surface tension of the plastic film.

In particular embodiments of the method as described herein, said food grade ink comprises from 0.0 wt% to 35.0 wt% of one or more food pigments, preferably from 15 to 35 wt% of one or more food pigments.

In particular embodiments of the method as described herein, said food grade ink comprises one or more sweeteners, one or more colorants, one or more binders, one or more thickeners, one or more milk powders, one or more emulsifiers and/or one or more solvents.

In particular embodiments of the method as described herein, said food grade ink has a viscosity of at least 200 cP and at most 4000 cP.

In particular embodiments of the method as described herein, the solid matter present in said food grade ink has a maximum grain size of 50 µm.

### BRIEF DESCRIPTION OF THE FIGURES

**Fig. 1** gives an illustrative schematic overview of transfer printing on pieces of chocolate.
**Fig. 2** illustrates an LDPE (low-density polyethylene) film printed with edible ink, obtained by the method for printing plastic film with edible ink (i.e. suitable for food) as described herein.
**Fig. 3** illustrates chocolate cast in a mould with star-shaped recesses on LDPE film printed with edible ink (i.e. suitable for food) according to the method for printing plastic film with edible ink (i.e. suitable for food) as described herein.
**Fig. 4** illustrates chocolate printed with edible ink (i.e. suitable for food) after the transfer printing process.

### DETAILED DESCRIPTION OF THE INVENTION

Although they potentially serve as a guide to aid understanding, each reference mark in the claims is not to be taken as a limitation of the extent of protection thereof.

As used herein, the singular forms "a" and "the" comprise both singular and plural unless the context clearly indicates otherwise.

The terms "comprising", "comprises" and "comprise" as used herein are synonymous with "including", "contains" or "contain", "includes", and are inclusive or open-ended and do not exclude additional, unstated members, elements or process steps. The terms "comprising", "comprises" and "comprise", when reference is made to said constituents, elements or process steps, also comprises embodiments that "consist of" said listed components, elements or process steps.

In addition, the terms first, second, third and so on in the description and in the claims are used to distinguish between similar elements and not necessarily for describing a successive or chronological order, unless stated otherwise. It will be clear that the terms so used are mutually interchangeable in appropriate circumstances and that the embodiments described herein may work in some other order than that described or illustrated herein.

The values, as used herein to refer to a measurable value, such as a parameter, an amount, a duration, and the like, are intended to comprise variations of ±10% or less, preferably ±5% or less, more preferably ±1% or less, and even more preferably ±0.1% or less of the stated value, in so far as such variations are suitable for ensuring one or more of the technical effects that are considered herein. It will be clear that each value as used herein is itself also specific and is preferably disclosed. Numerical ranges stated by limits comprise all numbers and fractions that lie within the respective ranges, including the stated limits.

All documents cited in the present description are incorporated hereby in their entirety by reference. Unless defined otherwise, all terms that are used in the concepts described herein, including technical and scientific terms, have the meaning as usually understood by a person skilled in the art. For further guidance, definitions for the terms used are included in the description for better understanding of the teaching of the present description. The concepts and definitions that are used herein are intended exclusively to help in understanding the teaching that is given herein.

Reference in this description to "one embodiment" or "an embodiment" signifies that a certain feature, structure or property, described in connection with the embodiment, is included in at least one embodiment that is considered herein. Thus, the use of the wording "in one embodiment" or "in an embodiment" at various points in this description does not necessarily always refer to the same embodiment, but it may. Moreover, the specific features, structures or properties may be combined in any suitable way, as would be clear for a person skilled in the art from this disclosure, in one or more embodiments. In addition, whereas some embodiments that are described herein comprise some, but not other features that are included in other embodiments, combinations of features of various embodiments are also considered herein, and they form different embodiments, as will be clear for a person skilled in the art. For example, in the appended claims, each of the features of the claimed embodiments may be used in any combination.

The present invention provides a solution for one or more of the aforementioned challenges. The present inventors found that treatment of plastic film with plasma improves the performance of screen printing and/or transfer printing with edible ink (i.e. suitable for food) and allows automation thereof. Plasma modification provides adhesion between the plastic film and the edible ink that makes it possible to obtain good-quality, quick-drying printing with high resolution on the plastic film by screen printing, but also allows much quicker transfer printing on a food product such as chocolate, without edible ink residues adhering to the plastic film. In addition, plasma modification of the plastic film ensures fewer printing faults through more homogeneous and more controlled functionality of the film and less adherence of sheets of plastic film to each other after printing and stacking and/or rolling-up the sheets of plastic film. The present inventors also found, moreover, that plasma modification of the plastic film allows a wider spectrum of edible ink (e.g. ranging from very liquid to more viscous ink) for transfer printing, so that print quality improves. For example, it is possible to print with ink formulations that have difficult wetting with an unmodified plastic film, which have a higher concentration of higher fatty acids, which have a higher concentration of titanium dioxide, which have a lower viscosity and/or which have quicker drying times/solidification times (i.e. drying of the ink holds up crystallization, and thus solidification, of the ink formulation).

The present invention relates to a method for the printing of chocolate with food grade ink, comprising the steps of
a) treating a surface of plastic film with plasma;
b) printing the plasma-treated surface of said plastic film with food grade ink; and
c) optionally drying the printed plastic film,
wherein the food grade ink is suitable for the printing of chocolate,
and wherein the printed plastic film is used for the printing of chocolate by transfer printing. The term "plastic film" as used herein refers to a thin sheet of plastic, consisting of one or more layers of a specific plastic or a combination of different types of plastics. Preferably the film has a thickness from 30 µm to 800 µm, from 50 µm to 500 µm, or from 50 µm to 300 µm, preferably from 30 µm to 100 µm. The film may be translucent or coloured and/or may comprise a pattern, image and/or text. Non-limiting examples of types of plastic are plastics suitable for the food industry such as low-density polyethylene (LDPE) (e.g. linear LDPE) and polyethylene terephthalate (PET) (e.g. amorphous PET (APET), crystalline PET (C-PET), recycled PET (RPET), glycol-modified PET (PETG)), medium-density polyethylene (MDPE), very low-density polyethylene (VLDPE), high-density polyethylene (HDPE), PVC (polyvinyl chloride), PP (polypropylene), polystyrene (PS), polyamide and polycarbonate (PC).

Preferably the plastic film consists of one or more layers of plastic suitable for use in the preparation of food products for human consumption.

In particular embodiments of the method as described herein, the plastic film consists of one or more layers of plastic, wherein the one or more layers of plastic may consist of one and the same or different types of plastic.

In particular embodiments of the method as described herein, the plastic film consists of one or more plastics selected from the group comprising low-density polyethylene (LDPE) (e.g. linear LDPE) and polyethylene terephthalate (PET) (e.g. amorphous PET (APET), crystalline PET (C-PET), recycled PET (RPET), glycol-modified PET (PETG)), medium-density polyethylene (MDPE), very low-density polyethylene (VLDPE), high-density polyethylene (HDPE), PVC (polyvinyl chloride), PP (polypropylene), polystyrene (PS), polyamide and polycarbonate (PC).

Preferably the plastic film consists of one or more plastics selected from the group comprising PVC (polyvinyl chloride), low-density polyethylene (LDPE) and polyethylene terephthalate (PET).

### LDPE

More preferably the plastic film as described herein consists of low-density polyethylene (LDPE) and/or polyethylene terephthalate (PET) or at least one outermost layer (upper side and/or underside) of a multilayer plastic film consists of LDPE and/or PET.

Plasma treatment of the surface of plastic film may reduce or increase the surface tension of the plastic film. The effect of the plasma treatment on the plastic film may among other things be determined by the type of plasma that is used during the plasma treatment and/or the duration of the plasma treatment. The inventors made the finding that when plasma treatment lowers the surface tension of plastic film (i.e. it becomes more hydrophobic), printing of the treated plastic film with edible inks with a high concentration of higher and/or saturated fatty acids (i.e. more viscous inks); and/or wherein the fat/oil ratio is at least 2, preferably at least 4; improves. Moreover, the inventors also made the finding that when plasma treatment increases the surface tension of plastic film (i.e. it becomes more hydrophilic), printing of the treated plastic film with edible inks with a low concentration of higher and/or saturated fatty acids (i.e. inks that are more liquid); and/or wherein the fat/oil ratio is at most 0.45, preferably at most 0.25; improves. In particular embodiments of the method as described herein, treating a surface of said plastic film with plasma comprises increasing or lowering the surface tension of the plastic film by at least 5%, at least 10%, at least 15%, at least 20%, at least 25%, at least 30%, at least 35%, at least 40%, at least 45%, at least 50%, at least 55%, or at least 60%, preferably at least 10% .

The term "surface tension" as used herein refers to a measure of the force acting upon molecules at the surface by the molecules directly under this surface. Surface tension arises because molecules and atoms at the outside (i.e. the surface) of a material have different possibilities for interaction than molecules and atoms in the bulk of a material. The surface tension of a substrate can be determined with any method for measuring surface tension known by a person skilled in the art. The surface tension of a solid phase, such as a plastic film, can be measured by any method known by a person skilled in the art for measuring the surface tension of a solid phase. For example, surface tension can be determined on the basis of static and/or dynamic contact angle measurements. For this it is possible to use a goniometer (e.g. the goniometer from the company Paul N Gardner, type PGX+, used according to ASTM 5946). The surface tension may be expressed as force per metre, such as newton per metre (N/m).

The surface tension of plastic film that is untreated or not treated with plasma depends on the type of plastic.

In particular embodiments of the method as described herein, the untreated plastic film consists of low-density polyethylene (LDPE) with a surface tension of at least 35 mN/m and at most 40 mN/m.

In particular embodiments of the method as described herein, the untreated plastic film consists of polyethylene terephthalate (PET) with a surface tension of at least 38 mN/m and at most 44 mN/m, preferably of at least 38 mN/m and at most 41 mN/m. In particular embodiments of the method as described herein, treating a surface of said plastic film with plasma comprises lowering the surface tension of the plastic film to a surface tension of at most 36 mN/m, at most 35 mN/m, at most 34 mN/m, at most 33 mN/m, at most 32 mN/m, at most 31 mN/m, at most 30 mN/m, at most 29 mN/m, or at most 28 mN/m. Preferably the plasma-treated plastic film has a surface tension of at most 30 mN/m. In particular embodiments, when said plastic film consists of LDPE, treating a surface of said plastic film with plasma comprises lowering the surface tension of LDPE to a surface tension of preferably at most 32 mN/m. In particular embodiments, when said plastic film consists of PET, treating a surface of said plastic film with plasma comprises lowering the surface tension of PET to a surface tension of preferably at most 36 mN/m.

In particular embodiments of the method as described herein, treating a surface of said plastic film with plasma comprises lowering the surface tension of the plastic film to a surface tension of at least 20 mN/m, at least 21 mN/m, at least 22 mN/m, at least 23 mN/m, at least 24 mN/m, at least 25 mN/m, at least 26 mN/m, at least 27 mN/m, or at least 28 mN/m, preferably at least 28 mN/m.

In particular embodiments of the method as described herein, treating a surface of said plastic film with plasma comprises lowering the surface tension of the plastic film to a surface tension from 20 mN/m to 36 mN/m, from 21 mN/m to 35 mN/m, from 22 mN/m to 34 mN/m, from 23 mN/m to 33 mN/m, from 24 mN/m to 32 mN/m, from 25 mN/m to 31 mN/m, from 26 mN/m to 30 mN/m, from 27 mN/m to 30 mN/m, or from 28 mN/m to 30 mN/m, preferably from 28 mN/m to 30 mN/m.

In particular embodiments of the method as described herein, treating a surface of said plastic film with plasma comprises increasing the surface tension of the plastic film to a surface tension of at least 42 mN/m, at least 43 mN/m, at least 44 mN/m, at least 45 mN/m, at least 46 mN/m, at least 47 mN/m, at least 48 mN/m, at least 49 mN/m, or at least 50 mN/m, preferably at least 46 mN/m. In particular embodiments, when said plastic film consists of LDPE, treating a surface of said plastic film with plasma comprises increasing the surface tension of LDPE to a surface tension of preferably at least 42 mN/m. In particular embodiments, when said plastic film consists of PET, treating a surface of said plastic film with plasma comprises increasing the surface tension of PET to a surface tension of preferably at least 46 mN/m.

In particular embodiments of the method as described herein, treating a surface of said plastic film with plasma comprises increasing the surface tension of the plastic film to a surface tension from 42 mN/m to 50 mN/m, from 43 mN/m to 50 mN/m, from 44 mN/m to 50 mN/m, from 45 mN/m to 50 mN/m, from 46 mN/m to 50 mN/m, from 47 mN/m to 50 mN/m, from 48 mN/m to 50 mN/m, or from 49 mN/m to 50 mN/m, preferably from 42 mN/m to 50 mN/m.

The term "plasma" as used herein refers to a completely or partially ionized gas consisting of positive ions and free electrons in proportions such that the resulting plasma has no electric charge. Gases and propellants may be converted into plasma by heating the gas or propellant and/or by subjecting it to a strong electromagnetic field. In plasma treatment of a substrate, such as plastic film, functional groups may be positioned on the surface of the substrate. The types of functional groups depend on the gas or propellant selected. For example, in the case of air as the gas or propellant, it is called flame plasma and groups may be applied with carbon atoms in a higher degree of oxidation. When using other types of gas, directed chemical modifications may be performed on the surface, for example grafting of fluorine compounds, alkyl compounds, etc., or combinations thereof. In this way the properties of the substrate surface can be altered without affecting the bulk properties (tensile strength, flexibility, density etc.) of the substrate.

In particular embodiments of the method as described herein, the plasma is air plasma or corona. In corona treatment, a low-temperature corona discharge plasma is used to cause deliberate changes in the properties of a surface, such as the surface of plastic film. A series of electrodes may be used in order to obtain a curtain of corona plasma, through which products, such as plastic film, may be passed in order to alter the surface energy of the material.

In particular embodiments of the method as described herein, the nozzle of the plasma torch has a diameter of at least 2 cm, at least 2.5 cm, or at least 3 cm, preferably of at least 2.5 cm. The nozzle may be cylindrical with a circular orifice.

In particular embodiments of the method as described herein, the nozzle is a rotating nozzle. The rotation may contribute to the homogeneity of the plasma. For example, the RD1004 rotating nozzle from Plasmatreat, Germany.

In particular embodiments of the method as described herein, the length of the plasma torch is at most 7 cm, at most 6 cm, at most 5 cm or at most 4 cm, preferably at most 5 cm.

In particular embodiments of the method as described herein, the distance between the nozzle or ionizing bar and the surface of the plastic film is at most 4 cm, at most 3 cm, at most 2 cm, at most 1.5 cm, or at most 1 cm, preferably at most 1.5 cm.

The term "ionizing bar", "ionizing rod", or "static bar" as described herein refers to apparatus that is used for removing static electricity from a production line. Ionizing bars may be suspended above a conveyor belt or other apparatus in a production line so that the product to be treated (e.g. plastic film) can pass under the ionizing bar. The distance between the ionizing bar and the product to be treated is usually calibrated for the specific application. The ionizing bar works by emitting an ionized corona onto the underlying products. If a product on the production line has a positive or negative static charge, while it passes through the ionized voltage field that is created by the ionizing bar, the product will attract the opposite positive or negative ions and become electrically neutral.

In particular embodiments of the method as described herein, the plasma treatment is carried out at 760 mmHg, which is atmospheric pressure. In plasma treatment at atmospheric pressure, plasma may be generated by high-power electrodes (e.g. 1000W), in the presence of gas at atmospheric pressure. Plasma produced from gas at atmospheric pressure is also called "atmospheric-pressure plasma" or "atmospheric plasma". Plasma may be generated by any method or apparatus known by a person skilled in the art for generating plasma. For example, plasma may be generated by means of the FG5001 plasma generator from Plasmatreat, Germany.

In particular embodiments of the method as described herein, the plasma is atmospheric plasma.

In particular embodiments of the method as described herein, the plasma is generated with air, oxygen (O₂), nitrogen (N₂), helium (He), argon (Ar), fluorine (F) or a combination thereof, as propellant.

In particular embodiments of the method as described herein, preferably in the methods as described herein wherein treatment of a surface of said plastic film with plasma comprises lowering the surface tension of the plastic film, the plasma is generated with the propellant N₂, F, or a combination thereof, preferably N₂.

In particular embodiments of the present methods, preferably in the methods as described herein, wherein treatment of a surface of said plastic film with plasma comprises lowering the surface tension of the plastic film, the plasma is N₂ plasma, F plasma, or a combination thereof, preferably N₂ plasma. In particular embodiments of the method as described herein, preferably in the methods as described herein, wherein treatment of a surface of said plastic film with plasma comprises lowering the surface tension of the plastic film, the plasma is atmospheric plasma generated with the propellant N₂, propellant F, or a combination thereof, preferably N₂ and in the absence of another type of propellant. In particular embodiments of the method as described herein, preferably in the methods as described herein wherein treatment of a surface of said plastic film with plasma comprises increasing the surface tension of the plastic film, the plasma is generated with the propellant O₂ or air.

In particular embodiments of the method as described herein, the plasma treatment of the plastic film takes place for a period of time from 10 milliseconds to 500 milliseconds, from 10 milliseconds to 250 milliseconds, or from 10 milliseconds to 100 milliseconds. For example, the plasma treatment of the plastic film takes place for a period of time of 1.4 seconds.

In particular embodiments of the method as described herein, for example when treating a surface of said plastic film with plasma comprises increasing the surface tension of the plastic film, the duration of the plasma treatment of the plastic film is from 0.5 seconds to 2.5 seconds, or from 1 second to 2 seconds, preferably from 0.5 seconds to 2.5 seconds.

In particular embodiments of the method as described herein, the plasma is N₂ plasma, when the plasma treatment lowers the surface tension of the plasma-treated plastic film; or is O₂ plasma, when the plasma treatment increases the surface tension of the plasma-treated plastic film.

By varying the plasma treatment time, the surface of the plastic film may be made more or less hydrophilic and/or hydrophobic.

The term "edible ink" as used herein refers to a coloured and/or pigmented composition suitable for food that may be used to colour and/or print food products. The term refers to ink that is suitable for human consumption, such as approved for human consumption by the European "European Food Safety Authority (EFSA)" and/or the American "Food and Drug Administration (FDA)". Edible ink also comprises only additives that are approved as food additives in the jurisdiction in which they are sold and/or consumed. For example, in the European Union, E numbers/codes are used for indicating approved food additives. The edible ink may comprise one or more food colorants, food pigments, lipophilic substances (e.g. fatty acids), emulsifiers, surface active substances, preservatives, food acids, gelling agents, binders, stabilizers, thickeners, acidity regulators, anticaking agents, taste enhancers, brighteners, antifoaming agents, sweeteners, sugars, auxiliaries and/or flavourings. The edible ink is preferably not transparent. The edible ink is suitable for the printing of chocolate.

In particular embodiments of the method as described herein, the edible ink comprises at most 40 wt%, at most 30 wt%, or at most 20 wt%, preferably at most 40 wt%, of one or more food colorants. In particular embodiments of the method as described herein, the edible ink comprises from 0 wt% to

40 wt%, or from 10 wt% to 30 wt% of one or more food colorants. Preferably the edible ink comprises from 20 wt% to 30 wt% of one or more food colorants. For example, the edible ink may comprise 25 wt% of one or more food colorants.

In particular embodiments of the method as described herein, the edible ink comprises at most 35 wt%, at most 30 wt%, or at most 25 wt% of one or more food pigments. Preferably the edible ink comprises at most 35 wt% of one or more food pigments.

In particular embodiments of the method as described herein, the edible ink comprises at least 5 wt%, at least 10 wt%, at least 15 wt%, or at least 20 wt% of one or more food pigments. Preferably the edible ink comprises at least 15 wt% of one or more food pigments.

In particular embodiments of the method as described herein, the edible ink comprises from 0 wt% to 35 wt%, from 5 wt% to 30 wt%, from 10 wt% to 30 wt%, or from 15 wt% to 25 wt% of a food pigment or a combination of food pigments. Preferably the edible ink comprises from 15 wt% to 35 wt% of one or more food pigments. For example, the edible ink may comprise 25 wt% of one or more food pigments.

A higher concentration of one or more food pigments usually provides increased covering power and/or quicker drying of the ink.

In particular embodiments of the method as described herein, the food pigment is one or more food pigments selected from the group consisting of titanium dioxide (TiO₂; E171), calcium carbonate (E170), iron oxide (E172), iron hydroxide (E172), aluminium (E173), silver (E174) and gold (E175); the food pigment is preferably titanium dioxide. In particular embodiments of the method as described herein, the edible ink comprises one or more fatty acids, preferably a combination of saturated and unsaturated fatty acids.

The term "fatty acid" as used herein refers to an organic carboxylic acid with a chain of at least two carbon atoms and a carboxyl group. A fatty acid is an unsaturated fatty acid when the fatty acid comprises at least one carbon-carbon double bond. Non-limiting examples of unsaturated fatty acids are simple unsaturated fatty acids, multiple unsaturated fatty acids, trans-fatty acids such as cholesterol. A fatty acid is a saturated fatty acid when it does not comprise a carbon-carbon double bond. Fatty acids may also be subdivided into higher and lower fatty acids. As used herein, the term "higher fatty acids" refers to fatty acids with a carbon chain of at least 11 carbon atoms. As used herein, the term "lower fatty acids" refers to fatty acids with a carbon chain of at most 11 carbon atoms. The presence of mainly lower fatty acids in the edible ink usually provides a lower viscosity of the ink. The presence of mainly higher fatty acids in the edible ink usually provides a higher viscosity of the ink. Saturated fatty acids, also called saturated fats, mainly occur in animal products (e.g. full milk products, fatty meat), but also in some vegetable products (e.g. coconut oil and palm oil). Saturated fatty acids are usually hard at room temperature (i.e. ambient temperature). Unsaturated fatty acids mainly occur in oils. Oils are usually liquid at room temperature and consist of at least 80% of unsaturated fatty acids.

In particular embodiments of the method as described herein the edible ink comprises at least 10 wt%, at least 15 wt%, at least 20 wt%, at least 25 wt%, at least 30 wt%, preferably at least 15 wt%, of one or more fatty acids, preferably one or more fatty acids with a carbon chain of at least 12 carbon atoms, at least 14 carbon atoms, or at least 16 carbon atoms, even more preferably one or more fatty acids with a carbon chain of at least 12 carbon atoms.

In particular embodiments of the method as described herein the edible ink comprises at most 80 wt%, at most 75 wt%, at most 70 wt%, at most 65 wt%, at most 60 wt%, at most 55 wt%, at most 50 wt%, at most 45 wt%, or at most 40 wt%, preferably at most 65 wt%, of one or more fatty acids, preferably one or more fatty acids with a carbon chain of at least 12 carbon atoms, at least 14 carbon atoms, or at least 16 carbon atoms, even more preferably one or more fatty acids with a carbon chain of at least 12 carbon atoms.

In particular embodiments of the method as described herein the edible ink comprises from 10 wt% to 80 wt%, from 15 wt% to 75 wt%, from 15 wt% to 70 wt%, from 15 wt% to 65 wt%, from 20 wt% to 60 wt%, from 20 wt% to 50 wt%, or from 20 wt% to 40 wt%, preferably from 15 wt% to 65 wt%, of one or more fatty acids, preferably one or more fatty acids with a carbon chain of at least 12 carbon atoms, at least 14 carbon atoms, or at least 16 carbon atoms, even more preferably one or more fatty acids with a carbon chain of at least 12 carbon atoms.

The present inventors found that by lowering the surface tension of plastic film by treating the surface of the plastic film with plasma it is possible to obtain high-quality printing with edible ink that contains a higher concentration of higher fatty acids than lower fatty acids; and/or speed up the printing process; and/or obtain better dispersion of food pigments; even when the high concentration of higher fatty acids is combined with high concentrations of solid matter, such as one or more food pigments. In particular embodiments of the method as described herein, wherein treatment of a surface of said plastic film with plasma comprises lowering the surface tension of the plastic film, the one or more fatty acids comprise at least 65 wt%, at least 70 wt%, at least 75 wt%, at least 80 wt%, at least 85 wt%, at least 90 wt%, or at least 95 wt%, preferably at least 80 wt%, of saturated fatty acids, preferably saturated fatty acids with a carbon chain of at least 12 carbon atoms, at least 14 carbon atoms, or at least 16 carbon atoms, even more preferably one or more saturated fatty acids with a carbon chain of at least 12 carbon atoms.

In particular embodiments of the method as described herein, wherein treatment of a surface of said plastic film with plasma comprises lowering the surface tension of the plastic film, the one or more fatty acids comprise at most 30 wt%, at most 25 wt%, at most 20 wt%, or at most 15 wt%, preferably at most 20 wt%, of one or more unsaturated fatty acids, preferably one or more unsaturated fatty acids with a carbon chain of at least 12 carbon atoms, at least 14 carbon atoms, or at least 16 carbon atoms, even more preferably one or more unsaturated fatty acids with a carbon chain of at least 12 carbon atoms.

Or put another way, in particular embodiments of the method as described herein, wherein treatment of a surface of said plastic film with plasma comprises lowering the surface tension of the plastic film, the edible ink comprises from 12 wt% to 60 wt%, from 15 wt% to 60 wt%, from 20 wt% to 60 wt%, from 25 wt% to 60 wt%, from 30 wt% to 60 wt%, from 35 wt% to 60 wt%, from 40 wt% to 60 wt%, from 45 wt% to 55 wt%, from 50 wt% to 55 wt%, from 50 wt% to 53 wt%, or from 50 wt% to 52 wt% of one or more saturated fatty acids, preferably one or more saturated fatty acids with a carbon chain of at least 12 carbon atoms, at least 14 carbon atoms, or at least 16 carbon atoms, preferably at least 12 carbon atoms.

In particular embodiments of the method as described herein, wherein treatment of a surface of said plastic film with plasma comprises lowering the surface tension of the plastic film, the edible ink comprises from 0 wt% to 15 wt%, from 0 wt% to 13 wt%, from 1 wt% to 15 wt%, from 3 wt% to 15 wt%, from 3 wt% to 13 wt%, or from 5 wt% to 10 wt%, of one or more unsaturated fatty acids, preferably one or more unsaturated fatty acids with a carbon chain of at least 12 carbon atoms, at least 14 carbon atoms, or at least 16 carbon atoms, even more preferably one or more unsaturated fatty acids with a carbon chain of at least 12 carbon atoms.

In particular embodiments of the method as described herein, wherein treatment of a surface of said plastic film with plasma comprises increasing the surface tension of the plastic film, the one or more fatty acids comprise at least 65 wt%, at least 70 wt%, at least 75 wt%, at least 80 wt%, at least 85 wt%, at least 90 wt%, or at least 95 wt%, preferably at least 80 wt%, of one or more unsaturated fatty acids, preferably one or more unsaturated fatty acids with a carbon chain of at least 12 carbon atoms, at least 14 carbon atoms, or at least 16 carbon atoms, even more preferably one or more unsaturated fatty acids with a carbon chain of at least 12 carbon atoms.

In particular embodiments of the method as described herein, wherein treatment of a surface of said plastic film with plasma comprises increasing the surface tension of the plastic film, the one or more fatty acids comprise at most 30 wt%, at most 25 wt%, at most 20 wt%, or at most 15 wt%, preferably at most 20 wt%, of one or more saturated fatty acids, preferably one or more saturated fatty acids with a carbon chain of at least 12 carbon atoms, at least 14 carbon atoms, or at least 16 carbon atoms, even more preferably one or more saturated fatty acids with a carbon chain of at least 12 carbon atoms.

Or put another way, in particular embodiments of the method as described herein, wherein treatment of a surface of said plastic film with plasma comprises increasing the surface tension of the plastic film, the edible ink comprises from 12 wt% to 60 wt%, from 15 wt% to 60 wt%, from 20 wt% to 60 wt%, from 25 wt% to 60 wt%, from 30 wt% to 60 wt%, from 35 wt% to 60 wt%, from 40 wt% to 60 wt%, from 45 wt% to 55 wt%, from 50 wt% to 55 wt%, from 50 wt% to 53 wt%, or from 50 wt% to 52 wt% of one or more unsaturated fatty acids, preferably one or more unsaturated fatty acids with a carbon chain of at least 12 carbon atoms, at least 14 carbon atoms, or at least 16 carbon atoms, preferably at least 12 carbon atoms.

In particular embodiments of the method as described herein, wherein treatment of a surface of said plastic film with plasma comprises increasing the surface tension of the plastic film, the edible ink comprises from 0 wt% to 15 wt%, from 0 wt% to 13 wt%, from 1 wt% to 15 wt%, from 3 wt% to 15 wt%, from 3 wt% to 13 wt%, or from 5 wt% to 10 wt%, of one or more saturated fatty acids, preferably one or more saturated fatty acids with a carbon chain of at least 12 carbon atoms, at least 14 carbon atoms, or at least 16 carbon atoms, even more preferably one or more saturated fatty acids with a carbon chain of at least 12 carbon atoms.

In particular embodiments of the method as described herein, the one or more fatty acids with a carbon chain of at least 12 carbon atoms are one or more fatty acids selected from the list consisting of stearic acid, lauric acid, palmitic acid, oleic acid, myristic acid, elaidic acid, palmitoloic acid, linolic acid, alpha-linolenic acid and arachidonic acid.

In particular embodiments of the method as described herein, the one or more saturated fatty acids with a carbon chain of at least 12 carbon atoms are one or more saturated fatty acids selected from the list consisting of stearic acid, lauric acid, palmitic acid, and myristic acid.

In particular embodiments of the method as described herein, the one or more fatty acids are present in the edible ink in the form of one or more fats and/or oils, preferably animal and/or vegetable fats and/or oils. Non-limiting examples of animal and/or vegetable fats and/or oils are lard, butter, milk fat, soya oil, palm seed oil, hard coconut oil, coconut oil, palm oil, cocoa butter, palm fat, palm seed oil, hempseed oil, maize oil, walnut oil, colza oil, cottonseed oil, rapeseed oil, wheatgerm oil, sunflower oil, or a combination thereof.

In particular embodiments of the method as described herein the edible ink comprises from 10 wt% to 80 wt%, from 15 wt% to 75 wt%, from 15 wt% to 70 wt%, from 15 wt% to 65 wt%, from 20 wt% to 60 wt%, from 20 wt% to 50 wt%, or from 20 wt% to 40 wt%, preferably from 15 wt% to 65 wt%, of one or more fats and/or oils.

In particular embodiments of the method as described herein the edible ink comprises one or more animal or vegetable fats and/or oils selected from the list consisting of lard, butter, milk fat, soya oil, palm seed oil, hard coconut oil, coconut oil, palm oil, cocoa butter, palm fat, hempseed oil, maize oil, walnut oil, colza oil, cottonseed oil, rapeseed oil, wheatgerm oil and sunflower oil, preferably one or more vegetable fats and/or oils selected from the list consisting of soya oil, palm seed oil, coconut oil, palm oil, cocoa butter, palm fat, maize oil, walnut oil, colza oil and rapeseed oil, even more preferably one or more vegetable fats and/or oils selected from the list consisting of cocoa butter, coconut oil and palm fat.

In particular embodiments of the method as described herein, wherein treatment of a surface of said plastic film with plasma comprises lowering the surface tension of the plastic film, the fat/oil ratio is at least 2, at least 2.5, at least 3, at least 4, at least 4.5, preferably at least 4. In particular embodiments of the method as described herein, wherein treatment of a surface of said plastic film with plasma comprises lowering the surface tension of the plastic film, the one or more fats and/or oils comprise at least 65 wt%, at least 70 wt%, at least 75 wt%, at least 80 wt%, preferably at least 70 wt%, of one or more fats, preferably one or more fats selected from the group comprising cocoa butter, coconut oil and palm fat.

In particular embodiments of the method as described herein, wherein treatment of a surface of said plastic film with plasma comprises lowering the surface tension of the plastic film, the one or more fats and/or oils comprise at most 30 wt%, at most 25 wt%, at most 20 wt%, at most 15 wt%, preferably at most 20 wt%, of one or more oils.

In particular embodiments of the method as described herein, wherein treatment of a surface of said plastic film with plasma comprises increasing the surface tension of the plastic film, the fat/oil ratio is at most 0.45, at most 0.40, at most 0.35, at most 0.30, or at most 0.25, preferably at most 0.25.

In particular embodiments of the method as described herein, wherein treatment of a surface of said plastic film with plasma comprises increasing the surface tension of the plastic film, the one or more fats and/or oils comprise at least 65 wt%, at least 70 wt%, at least 75 wt%, at least 80 wt%, preferably at least 70 wt%, of one or more oils.

In particular embodiments of the method as described herein, wherein treatment of a surface of said plastic film with plasma comprises increasing the surface tension of the plastic film, the one or more fats and/or oils comprise at most 30 wt%, at most 25 wt%, at most 20 wt%, at most 15 wt%, preferably at most 20 wt%, of one or more fats, preferably of one or more fats selected from the group comprising cocoa butter, coconut oil and palm fat. In particular embodiments of the method as described herein the edible ink comprises one or more sweeteners, colorants, binders, thickeners, milk powders, emulsifiers and/or solvents. A person skilled in the art will understand that sweeteners, colorants, binders, thickeners, milk powders, emulsifiers and/or solvents may each be a known, food-grade sweetener, colorant, binder, thickener, milk powder, emulsifier and/or solvent. The term "sweetener" as used herein refers to a natural or synthetic substance with a sweet taste. Non-limiting examples of sweeteners are sugars, artificial sweeteners and sugar substitutes. For example, monosaccharides, disaccharides, polysaccharides, aspartame, steviosides, sucralose and acesulfame-K.

The term "sugar" as used herein refers to a sweet-tasting carbohydrate. Non-limiting examples of sugars are monosaccharides, comprising three to seven carbon sugars, such as pentoses (e.g. ribose, arabinose, xylose, lyxose, ribulose and xylulose) and hexoses (e.g. allose, altrose, glucose, mannose, gulose, idose, galactose, talose, sorbose, psicose, fructose, and tagatose); oligosaccharides such as disaccharides (e.g. maltose, sucrose, cellobiose, trehalose and lactose); and polysaccharides such as starch, dextrin, cellulose and glycogen.

In particular embodiments of the method as described herein the sweetener is sucrose or glucose, preferably sucrose.

In particular embodiments of the method as described herein the food colouring matter is a colouring matter selected from the list consisting of E100, E101, E102, E103, E104, E105, E106, E107, E110, E120, E122, E123, E124, E127, E128, E129, E131, E132, E133, E140, E141, E142, E150a, E150b, E150c, E150d, E151, E153, E154, E155, E160a, E160b, E160c, E160d, E160e, E160f, E161a, E161b, E161c, E161d, E161h, E161i, E162, E163, E180 and E181.

In particular embodiments of the method as described herein the binder is a binder selected from the list consisting of dextrin, maltose and modified starch.

In particular embodiments of the method as described herein the thickener is a thickener selected from the list consisting of gelatin, agar, pectin, alginate, xanthan derivative and gum arabic.

In particular embodiments of the methods as described herein, the milk powder comprises casein, lactose and milk fat.

In particular embodiments of the methods as described herein, the emulsifier is a mono- or diglyceride, such as a polysorbate (e.g. polyoxyethylene (20) sorbitan monostearate), or lecithin.

In particular embodiments of the method as described herein the solvent is water, ethanol or a combination of water and ethanol, preferably water.

In particular embodiments of the methods as described herein, the edible ink comprises:
- from 0 wt% to 40 wt% of food colorants;
- from 0 wt% to 35 wt% of food pigments, preferably TiO₂; and
- from 15 wt% to 65 wt% of fats and/or oils; preferably wherein the fat/oil ratio is at least 2, preferably at least 4, when the method comprises lowering the surface tension of the plastic film; and wherein the fat/oil ratio is at most 0.45, preferably at most 0.25, when the method comprises increasing the surface tension of the plastic film.

In particular embodiments of the method as described herein, wherein treatment of a surface of said plastic film with plasma comprises lowering the surface tension of the plastic film, the edible ink has a viscosity from 50 cP to 250 cP, from 50 cP to 225 cP, from 50 cP to 200 cP, from 100 cP to 200 cP, preferably from 50 cP to 250 cP, even more preferably from 50 cP to 200 cP. The viscosity of the edible ink is preferably measured at a temperature of 32°C.

In particular embodiments of the method as described herein, wherein treatment of a surface of said plastic film with plasma comprises increasing the surface tension of the plastic film, the edible ink has a viscosity from 250 cP to 5000 cP, from 300 cP to 5000 cP, from 500 cP to 5000 cP, from 1000 cP to 5000 cP, from 1000 cP to 4000 cP, from 1000 cP to 3000 cP, from 2000 cP to 5000 cP, from 3000 cP to 5000 cP, from 4000 cP to 5000 cP, preferably from 250 cP to 5000 cP, even more preferably from 300 cP to 5000 cP. The viscosity of the edible ink is preferably measured at a temperature of 32°C.

A person skilled in the art will understand that the composition and viscosity of the edible ink depend on the fat/oil ratio and/or the amount of solid matter present in the ink; and/or should be adapted to the method of printing. Edible inks suitable for inkjet printing usually have a lower viscosity than those for screen printing.

In particular embodiments of the method as described herein, the solid matter present in the edible ink has a maximum grain size of 50 µm, 60 µm, 70 µm, 80 µm, preferably 50 µm.

The term "solid matter" as described herein refers to matter that is in the solid state of aggregation, for example food pigments and antioxidants.

In particular embodiments of the method as described herein the edible ink has a pH from 5.2 to 8.0. In particular embodiments of the method as described herein the edible ink is suitable for the printing of chocolate. If the edible ink is suitable for the printing of chocolate surfaces it may also be referred to with the term "chocolate ink".

In particular embodiments of the method as described herein the edible ink has a melting point of at least 25°C, at least 26°C, at least 27°C, at least 28°C, at least 29°C, at least 30°C, at least 31°C, at least 32°C, at least 33°C, at least 34°C, or at least 35°C, preferably at least 28°C.

In particular embodiments of the method as described herein the edible ink has a drying time and/or solidification time from 0.25 seconds to 15 seconds.

In particular embodiments of the methods as described herein the edible ink comprises one or more of the following properties:
- sufficient wettability with respect to the plastic film to be printed,
- well-adapted rheology,
- thixotropic at low shear stress,
- good miscibility of all components,
- quick drying time at lower temperatures, and/or
- sufficient covering power.

The term "printing" as used herein refers to the application of a text, image and/or pattern on a substrate by means of a printing technique. Non-limiting examples of said printing techniques are letterpress, planographic printing, gravure, screen printing (e.g. silkscreen printing) or digital printing (e.g. inkjet printer).

In particular embodiments of the method as described herein, printing of the plasma-treated plastic film with edible ink takes place by screen printing. Screen printing is preferably used in the case of printing the plasma-treated plastic film with edible ink wherein the fat/oil ratio is at least 2, preferably at least 4, and/or in the methods as described herein wherein treatment of a surface of said plastic film with plasma comprises lowering the surface tension of the plastic film.

The term "screen printing" or "silkscreen printing" ("serigraphy") as used herein refers to a printing technique wherein ink is pressed through a screen. In screen printing, usually a piece of fine gauze, for example gauze made of silk, polyester or steel, is stretched over a frame. The screen printing frame may then be provided with a light-sensitive layer that is exposed by means of a positive film. The darker areas present on the positive can be washed away during development so that permeable spots are formed on the screen printing frame, which form a desired stencil, through which the ink can be pressed. Then ink can be applied on the frame and spread out, for example by means of a squeegee, whereby the shape of the stencil can be printed on the object to be printed (the image carrier). This technique can be repeated with different colours and shapes, which are printed next to each other or on top of each other. In this way, complex images may be applied on a substrate, such as plastic film. The advantage of screen printing is that formulations having good coverage may be used, thus also allowing printing on dark image carriers. A person skilled in the art will understand that a fine screen is preferably used for the screen printing of edible ink. Preferably the wire of the screen has a thickness from 30 to 40 µm. A person skilled in the art will understand that the thickness of the printing applied is partly determined by the wiring of the screen used. Screen printing may be carried out both manually and by machine.

In particular embodiments of the method as described herein, printing of the plasma-treated plastic film with edible ink takes place at most 10 seconds, at most 20 seconds, at most 30 seconds, at most 40 seconds, at most 50 seconds, or at most 1 minute, preferably at most 1 minute, after treatment of the surface of said plastic film with plasma.

In particular embodiments of the method as described herein, printing of the plasma-treated plastic film with edible ink takes place at most 2 seconds, at most 3 seconds, at most 4 seconds, at most 5 seconds, at most 10 seconds, at most 20 seconds, at most 30 seconds, preferably at most 2 seconds, after treatment of the surface of said plastic film with plasma.

In particular embodiments of the method as described herein, printing of the plasma-treated plastic film with edible ink takes place immediately after treatment of the surface of said plastic film with plasma.

In particular embodiments of the method as described herein, drying and/or solidification of the printed plastic film take place at a temperature from 5°C to 24°C, from 10°C to 20°C, or from 12°C to 18°C, preferably from 10°C to 20°C. A person skilled in the art will understand that the maximum and minimum drying/solidification temperature depends on the composition of the edible ink and the thickness of the print of edible ink. For example, a person skilled in the art will understand that the drying/solidification temperature is preferably below the melting point of the edible ink.

In particular embodiments of the method as described herein, drying takes place according to a multistep process. For example, drying and/or solidification of the printed plastic film take place gradually, as follows: 0 to 2 seconds at 10°C, 0 to 2 seconds at 14°C, 0 to 2 seconds at 16°C, then 0 to 2 seconds at 20°C.

In particular embodiments of the method as described herein, the thickness of printing of edible ink on the plastic film is at most 150 µm, at most 200 µm or at most 300 µm, preferably at most 300 µm. In particular embodiments of the method as described herein, the thickness of printing of edible ink is at least 30 µm, at least 50 µm, at least 100 µm, preferably at least 30 µm.

In particular embodiments of the method as described herein, the thickness of printing of edible ink is from 30 µm to 350 µm, from 30 µm to 300 µm, from 50 µm to 200 µm, or from 100 µm to 150 µm, preferably from 30 µm to 300 µm. The printed plastic film obtained may be used as transfer film for the printing of food products, such as chocolate, by transfer printing.

The term "transfer printing" as used herein refers to the printing process wherein an image, text and/or pattern printed on a flexible substrate, such as paper or film, for example plastic film, is transferred to another substrate, such as a food product, for example chocolate. This may take place by means of a thermal process, for example by heating the substrate.

In particular embodiments of the method as described herein, the method is carried out by machine. In particular embodiments of the method as described herein, the method comprises transferring a print of food grade ink from the printed plastic film onto chocolate by heating the chocolate and/or the printed plastic film.

In particular embodiments of the method as described herein, the method comprises the steps of
a) bringing chocolate with a temperature of at least 28.0°C into contact with the printed plastic film,
b) optionally cooling the chocolate, and
c) removing the printed plastic film from the chocolate so that the print of food grade ink is released from the printed plastic film and remains on the chocolate.

According to a further embodiment, the present invention relates to a method for the printing of chocolate with edible ink comprising the transfer of a print of edible ink printed on a plasma-treated plastic film onto chocolate by heating the chocolate and/or the plasma-treated plastic film.

The term "chocolate" as used herein refers to a composition comprising cocoa butter, fat-free cocoa constituents, sugars and/or sweeteners. Chocolate may comprise one or more vegetable fats and/or oils, milk powders, milk powder substitutes, cocoa powders, cocoa powder substitutes, emulsifiers, flavourings, sugars and/or sugar substitutes. More specifically, the term "chocolate" as used herein refers to chocolate as described in guideline 2000/36/EC of the European Parliament and Council dated 23 June 2000 relating to cocoa products and chocolate products for human consumption.

Non-limiting examples of chocolate are:
- dark or plain chocolate, which is a product obtained from cocoa mass, sugars, cocoa butter, lecithin and natural vanilla flavouring, comprising at least 54% of dry cocoa constituents;
- milk chocolate, which is a product obtained from sugar, cocoa butter, whole milk powder, cocoa mass, lecithin and natural vanilla flavouring, comprising at least 33% of dry cocoa constituents; and
- white chocolate, which is a product obtained from sugar, cocoa butter, whole milk powder, lecithin and natural vanilla flavouring, comprising at least 27% of dry cocoa constituents.

Chocolate may also refer to chocolate products that comprise fillings or centres. Non-limiting examples of chocolate products that comprise fillings are pralines and filled chocolate bars. Non-limiting examples of chocolate products that comprise centres are chocolates with (dried) fruit, nuts, puffed cereals and/or spiced biscuit.

In particular embodiments of the method as described herein, the chocolate has a smooth or flat surface.

In particular embodiments of the method as described herein, the printed plastic film is placed on the chocolate in such a way that the printing overlaps with the chocolate surface.

In particular embodiments of the method as described herein, the chocolate and/or the plasma-treated plastic film are heated until the chocolate is liquid.

In particular embodiments of the method as described herein, the chocolate and/or the plasma-treated plastic film are heated to a temperature of at least 28°C, at least 29°C, at least 30°C, at least 35°C, at least 36°C, at least 37°C, at least 38°C, at least 39°C, or at least 40°C, preferably at least 28°C. In particular embodiments of the method as described herein, the chocolate and/or the plasma-treated plastic film are heated to a temperature of at most 120°C, at most 100°C, at most 80°C, at most 60°C, at most 50°C, preferably at most 100°C.

In particular embodiments of the method as described herein, the chocolate and/or the plasma-treated plastic film are heated to a temperature of at least 28°C and at most 100°C, or at least 38°C and at most 100°C, preferably at least 28°C and at most 100°C.

In particular embodiments of the method as described herein, the printed plastic film is brought into contact with the chocolate surface for at least 5 seconds, at least 10 seconds, at least 20 seconds, at least 30 seconds or at least 1 minute, preferably for at least 10 seconds.

In particular embodiments of the method as described herein, the chocolate surface and the printed plastic film are cooled again after heating, before removing the plastic film from the chocolate surface, so that the print of edible ink is released from the plasma-treated plastic film and remains on the chocolate surface.

In particular embodiments of the method as described herein, the printed plastic film is brought into contact with the chocolate surface until the chocolate surface and the plastic film have cooled down, preferably cooled down to a temperature of at most 30°C, at most 29°C, at most 28°C, at most 27°C, at most 26°C, at most 25°C, at most 24°C, at most 23°C, at most 22°C, at most 21°C, at most 20°C, preferably to a temperature of at most 25°C. For example, to a temperature of 25°C, 24°C, 23°C, 22°C, 21°C, 20°C, 19°C or 18°C, preferably to room temperature.

A person skilled in the art will moreover understand that the side of the plastic film on which the edible ink is printed must be positioned on the chocolate surface, because the heating of the plastic film and/or chocolate surface will ensure that the print of edible ink adheres to the chocolate surface.

In particular embodiments of the method as described herein, the printed plastic film is pressed on the chocolate surface, for example by means of a hot press.

In particular embodiments of the method as described herein, the method comprises the following steps:
a) bringing chocolate with a temperature of at least 28°C into contact with a plasma-treated plastic film, wherein the plasma-treated plastic film comprises a print of edible ink,
b) optionally cooling the chocolate, and
c) removing the plasma-treated plastic film from the chocolate so that the print of edible ink is released from the plasma-treated plastic film and remains on the chocolate.

In particular embodiments of the method as described herein, the time between bringing a chocolate surface with a temperature of at least 28°C into contact with a plasma-treated plastic film, wherein the plasma-treated plastic film comprises a print of edible ink, and removing the plasma-treated plastic film from the chocolate surface so that the print of edible ink is released from the plasma-treated plastic film and remains on the surface of the chocolate, coincides with the time it takes for the edible ink to solidify and/or dry.

In particular embodiments of the method as described herein, the method comprises the following steps:
a) pouring liquid chocolate with a temperature of at least 28°C into a mould that comprises openings that are in direct contact with a plasma-treated plastic film, wherein the plasma-treated plastic film comprises a print of edible ink,
b) cooling the chocolate, the mould and/or the plasma-treated plastic film,
c) turning over the chocolate-filled mould and the plasma-treated plastic film adhering thereto,
d) removing the plasma-treated plastic film from the chocolate so that the print of edible ink is released from the plasma-treated plastic film and remains on the chocolate; and
e) removing the mould from the chocolate so that pieces of chocolate printed with edible ink are obtained.

In particular embodiments of the method as described herein, the plastic film is removed. Preferably the plastic film is removed when the plastic film has a temperature of at most 30°C, at most 29°C, at most 28°C, at most 27°C, at most 26°C, at most 25°C, at most 24°C, at most 23°C, at most 22°C, at most 21°C, at most 20°C, preferably a temperature of at most 25°C. For example, a temperature of 25°C, 24°C, 23°C, 22°C, 21°C, 20°C, 19°C or 18°C, preferably room temperature.

The plastic film may be removed manually or by machine. Preferably the plastic film is removed by pulling the plastic film in a single motion and at an angle of at most 45° forwards away from the printed chocolate surface. The present method allows the plastic film to be removed from the chocolate without leaving adhering residues, namely residues of printing of edible ink and/or chocolate, on the plastic film.

The plasma-treated plastic film comprising a print of edible ink produced during the method as described herein may be stored for a period of at least 3 months, at least 6 months, at least 12 months, at least 18 months, at least 24 months, preferably at least 12 months.

Different sheets of the plasma-treated plastic film comprising a print of edible ink produced during the method as described herein may be stacked and/or rolled up without them adhering to each other. The present invention relates also to the use of plasma in the method for speeding up the printing of plastic film with edible ink and/or the drying of the plastic film printed with edible ink.

The present invention relates also to the use of a plasma-treated plastic film in the method for improving the quality of transfer printing, for increasing the speed of transfer printing and/or for automating transfer printing.

### EXAMPLES

### Example 1: method for printing LDPE film with edible ink

A sheet of LDPE film was placed in the template of a screen print and then drawn in by vacuum for proper positioning of the sheet. Then the sheet of LDPE film was treated with atmospheric plasma by means of a plasma generator (Plasmatreat) for 1.4 seconds in order to lower the surface tension of the whole surface of the LDPE film. The settings of the plasma generator were as follows: distance between plastic film and plasma torch 0-8 cm, pressure used for the propellant: 1000-3000 mbar, Propellant: open air, N₂, Ar, F and Voltage: 9-15 keV. After plasma treatment, the sheet of LDPE film was covered with a screen-printing stencil and printed with edible ink comprising 25 wt% of fatty acids with a carbon chain of at least 12 carbon atoms and 25 wt% of TiO₂. After 0.8 seconds the screen-printing stencil was removed and the ink present on the LDPE film was dried lightly for 1.1 seconds. After this initial drying, the printed sheet of LDPE film was removed and put on a drying rack. After thorough drying, the sheet of printed LDPE film was put on a stack with other sheets of printed LDPE film.

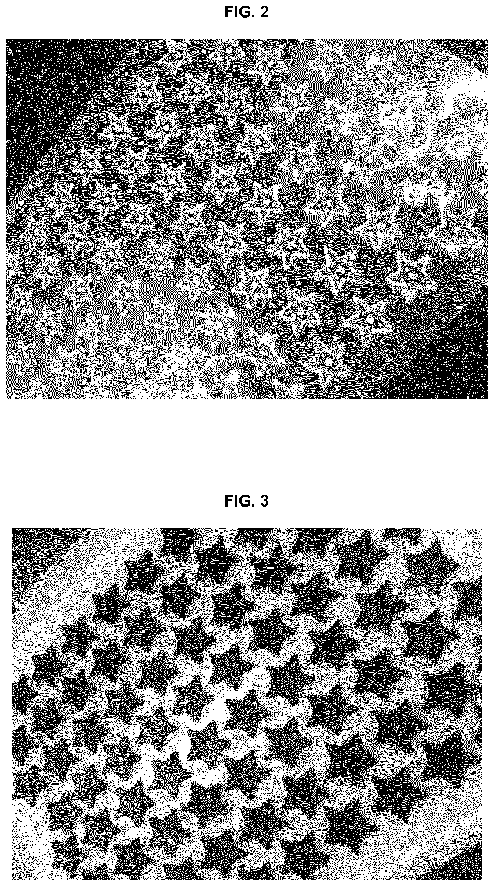

The plasma treatment of the LDPE film ensured optimum adhesion between the edible ink and the LDPE film. Furthermore, the plasma treatment of the LDPE film allowed the printing time and the drying time of the screen-printing process to be shortened, so that process automation was possible and the sheets of printed LDPE film could be stacked. In addition, the plasma treatment of the LDPE film also ensured better-quality printing, with a higher resolution (Fig. 2), and that the sheets of LDPE film did not adhere to each other in the short and medium term.

### Example 2: method for the printing of chocolate with edible ink

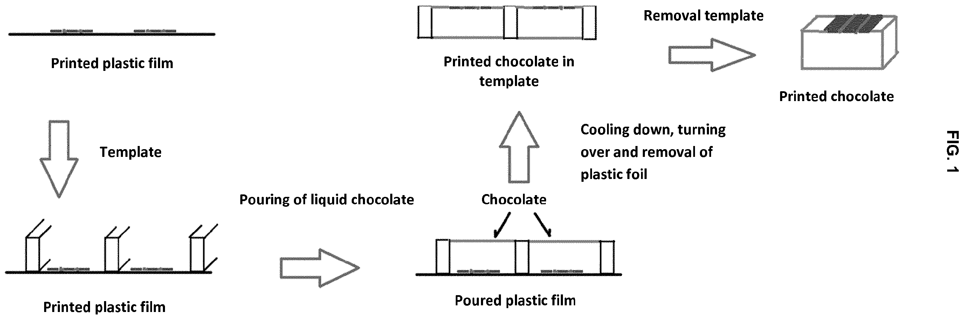

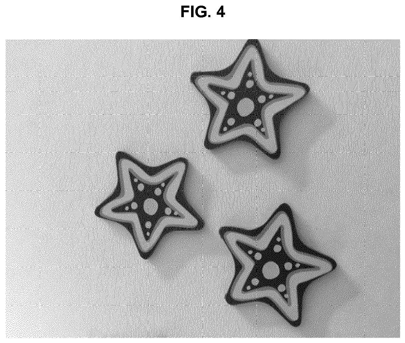

The LDPE film printed with edible ink from example 1 was used for printing star-shaped pieces of chocolate (Fig. 1). More specifically, a mould with star-shaped recesses was positioned on the LDPE film printed with edible ink in such a way that in each case one print was located in the middle of one of the star-shaped recesses. Then liquid chocolate at a temperature 38-40°C was poured into the star-shaped recesses of the mould and onto the LDPE film printed with edible ink (Fig. 3). After the chocolate had cooled down, the mould was turned over and the plastic film was removed, wherein the prints of edible ink were left on the pieces of chocolate. Then the printed pieces of chocolate were removed from the mould (Fig. 4).

The initial plasma treatment of the LDPE film ensured that the adhesion of the edible ink to the LDPE film was not too strong, so that no residues were left on the LDPE film after the transfer printing on the chocolate.

### Example 3: method for printing LDPE film with edible ink

A sheet of LDPE film is taken from a stack of several sheets of LDPE film and corona-treated by means of an ionizer in order to lower the surface tension of the whole surface of the LDPE film. Then the sheet of LDPE film is covered with a screen-printing stencil and printed with edible ink comprising 25 wt% of fatty acids with a carbon chain of at least 12 carbon atoms and 25 wt% of TiO₂.

The corona treatment of the LDPE film ensured optimum adhesion between the edible ink and the LDPE film. Furthermore, the corona treatment of the LDPE film allowed the printing time and the drying time of the screen-printing process to be shortened, so that process automation is possible and the sheets of printed LDPE film can be stacked. In addition, the corona treatment of the LDPE film also ensured better-quality printing, with higher resolution, and that the sheets of LDPE film do not adhere to each other in the short and medium term.

## Claims

1. Method for the printing of chocolate with food grade ink, comprising the steps of
a) treating a surface of plastic film with plasma;
b) printing the plasma-treated surface of said plastic film with food grade ink; and
c) optionally drying the printed plastic film,
wherein the food grade ink is suitable for the printing of chocolate, and wherein the printed plastic film is used for the printing of chocolate by transfer printing.

2. Method according to Claim 1, wherein treatment of a surface of said plastic film with plasma comprises increasing or lowering the surface tension of the plastic film by at least 5%, preferably at least 10%.

3. Method according to Claim 1 or 2, wherein the printing of the plasma-treated plastic film with food grade ink takes place by screen printing.

4. Method for the printing of chocolate with food grade ink according to one of Claims 1-3, comprising transferring a print of food grade ink from the printed plastic film onto chocolate by heating the chocolate and/or the printed plastic film.

5. Method for the printing of chocolate with food grade ink according to Claim 4, comprising the steps of
a) bringing chocolate with a temperature of at least 28°C into contact with the printed plastic film,
b) optionally cooling the chocolate, and
c) removing the printed plastic film from the chocolate so that the print of food grade ink is released from the printed plastic film and remains on the chocolate.

6. Method according to one of Claims 1-5, wherein said plasma is atmospheric plasma.

7. Method according to one of Claims 1-6, wherein said plasma is N₂ plasma, when the plasma treatment lowers the surface tension of the plastic film; or wherein said plasma is O₂ plasma, when the plasma treatment increases the surface tension of the plastic film.

8. Method according to one of Claims 1-7, wherein said plastic film consists of low-density polyethylene (LDPE) and/or polyethylene terephthalate (PET).

9. Method according to one of Claims 1-8, wherein the plasma treatment lowers the surface tension of the plastic film, preferably lowers it to a surface tension of at most 32 mN/m; or wherein the plasma treatment increases the surface tension of the plastic film, preferably increases it to a surface tension of at least 46 mN/m.

10. Method according to one of Claims 1-9, wherein said food grade ink comprises from 15 wt% to 65 wt% of fats and/or oils, wherein the fat/oil ratio is at least 2, preferably at least 4, when the plasma treatment lowers the surface tension of the plastic film; or wherein the fat/oil ratio is at most 0.45, preferably at most 0.25, when the plasma treatment increases the surface tension of the plastic film.

11. Method according to one of Claims 1-10, wherein said food grade ink comprises from 0 wt% to 35 wt% of one or more food pigments, preferably from 15 to 35 wt% of one or more food pigments.

12. Method according to one of Claims 1-11, wherein said food grade ink comprises one or more sweeteners, one or more colorants, one or more binders, one or more thickeners, one or more milk powders, one or more emulsifiers and/or one or more solvents.

13. Method according to one of Claims 1-12, wherein said food grade ink has a viscosity of at least 200 cP and at most 4000 cP and/or has a maximum grain size of 50 µm.

14. Method according to one of Claims 1 to 13, wherein said food grade ink comprises one or more fatty acids, preferably comprises at least 10 wt% of one or more fatty acids.

## Patentansprüche

1. Verfahren zum Bedrucken von Schokolade mit Tinte in Lebensmittelqualität, umfassend die folgenden Schritte:
a) Behandeln einer Oberfläche einer Kunststofffolie mit Plasma;
b) Bedrucken der mit Plasma behandelten Oberfläche der Kunststofffolie mit Tinte in Lebensmittelqualität; und
c) gegebenenfalls Trocknen der bedruckten Kunststofffolie,
wobei die Tinte in Lebensmittelqualität zum Bedrucken von Schokolade geeignet ist und wobei die bedruckte Kunststofffolie zum Bedrucken von Schokolade mittels Transferdruck verwendet wird.

2. Verfahren nach Anspruch 1, wobei die Behandlung einer Oberfläche der Kunststofffolie mit Plasma ein Erhöhen oder Verringern der Oberflächenspannung der Kunststofffolie um mindestens 5 %, vorzugsweise mindestens 10 % umfasst.

3. Verfahren nach Anspruch 1 oder 2, wobei das Bedrucken der mit Plasma behandelten Kunststofffolie mit Tinte in Lebensmittelqualität mittels Siebdruck erfolgt.

4. Verfahren zum Bedrucken von Schokolade mit Tinte in Lebensmittelqualität nach einem der Ansprüche 1-3, umfassend ein Überführen eines Drucks aus Tinte in Lebensmittelqualität von der bedruckten Kunststofffolie auf Schokolade durch Erwärmen der Schokolade und/oder der bedruckten Kunststofffolie.

5. Verfahren zum Bedrucken von Schokolade mit Tinte in Lebensmittelqualität nach Anspruch 4, umfassend die folgenden Schritte:
a) Inkontaktbringen der Schokolade mit einer Temperatur von mindestens 28 °C mit der bedruckten Kunststofffolie,
b) gegebenenfalls Abkühlen der Schokolade und
c) Entfernen der bedruckten Kunststofffolie von der Schokolade, sodass der Druck aus Tinte in Lebensmittelqualität von der bedruckten Kunststofffolie gelöst wird und auf der Schokolade verbleibt.

6. Verfahren nach einem der Ansprüche 1-5, wobei es sich bei dem Plasma um atmosphärisches Plasma handelt.

7. Verfahren nach einem der Ansprüche 1-6, wobei es sich bei dem Plasma um N₂-Plasma handelt, wenn die Plasmabehandlung die Oberflächenspannung der Kunststofffolie verringert; oder wobei es sich bei dem Plasma um O₂-Plasma handelt, wenn die Plasmabehandlung die Oberflächenspannung der Kunststofffolie erhöht.

8. Verfahren nach einem der Ansprüche 1-7, wobei die Kunststofffolie aus Polyethylen geringer Dichte (LDPE) und/oder Polyethylenterephthalat (PET) besteht.

9. Verfahren nach einem der Ansprüche 1-8, wobei die Plasmabehandlung die Oberflächenspannung der Kunststofffolie verringert, sie vorzugsweise auf eine Oberflächenspannung von höchstens 32 mN/m verringert; oder wobei die Plasmabehandlung die Oberflächenspannung der Kunststofffolie erhöht, sie vorzugsweise auf eine Oberflächenspannung von mindestens 46 mN/m erhöht.

10. Verfahren nach einem der Ansprüche 1-9, wobei die Tinte in Lebensmittelqualität zu 15 Gew.-% bis 65 Gew.-% Fette und/oder Öle umfasst, wobei das Fett/Öl-Verhältnis mindestens 2, vorzugsweise mindestens 4 beträgt, wenn die Plasmabehandlung die Oberflächenspannung der Kunststofffolie verringert; oder wobei das Fett/Öl-Verhältnis höchstens 0,45, vorzugsweise höchstens 0,25 beträgt, wenn die Plasmabehandlung die Oberflächenspannung der Kunststofffolie erhöht.

11. Verfahren nach einem der Ansprüche 1-10, wobei die Tinte in Lebensmittelqualität zu 0 Gew.-% bis 35 Gew.-% ein oder mehrere Lebensmittelpigmente, vorzugsweise zu 15 bis 35 Gew.-% ein oder mehrere Lebensmittelpigmente umfasst.

12. Verfahren nach einem der Ansprüche 1-11, wobei die Tinte in Lebensmittelqualität einen oder mehrere Süßstoffe, einen oder mehrere Farbstoffe, ein oder mehrere Bindemittel, ein oder mehrere Verdickungsmittel, ein oder mehrere Milchpulver, einen oder mehrere Emulgatoren und/oder ein oder mehrere Lösungsmittel umfasst.

13. Verfahren nach einem der Ansprüche 1-12, wobei die Tinte in Lebensmittelqualität eine Viskosität von mindestens 200 cP und höchstens 4000 cP aufweist und/oder eine maximale Korngröße von 50 µm aufweist.

14. Verfahren nach einem der Ansprüche 1 bis 13, wobei die Tinte in Lebensmittelqualität eine oder mehrere Fettsäuren umfasst, vorzugsweise zu mindestens 10 Gew.-% eine oder mehrere Fettsäuren umfasst.

## Revendications

1. Procédé d'impression de chocolat avec de l'encre de qualité alimentaire, comprenant les étapes de
a) traitement d'une surface de film plastique avec un plasma ;
b) impression de la surface traitée par plasma dudit film plastique avec de l'encre de qualité alimentaire ; et
c) éventuellement, séchage du film plastique imprimé,
dans lequel l'encre de qualité alimentaire est adaptée à l'impression de chocolat, et dans lequel le film plastique imprimé est utilisé pour l'impression de chocolat par impression par transfert.

2. Procédé selon la revendication 1, dans lequel le traitement d'une surface dudit film plastique avec un plasma comprend l'augmentation ou la diminution de la tension superficielle du film plastique d'au moins 5 %, de préférence au moins 10 %.

3. Procédé selon la revendication 1 ou 2, dans lequel l'impression du film plastique traité par plasma avec de l'encre de qualité alimentaire se fait par sérigraphie.

4. Procédé d'impression de chocolat avec de l'encre de qualité alimentaire selon une des revendications 1 à 3, comprenant le transfert d'un imprimé d'encre de qualité alimentaire depuis le film plastique imprimé sur du chocolat par chauffage du chocolat et/ou du film plastique imprimé.

5. Procédé d'impression de chocolat avec de l'encre de qualité alimentaire selon la revendication 4, comprenant les étapes de
a) mise en contact de chocolat à une température d'au moins 28 °C avec le film plastique imprimé,
b) éventuellement, refroidissement du chocolat, et
c) retrait du film plastique imprimé du chocolat de telle sorte que l'imprimé d'encre de qualité alimentaire soit libéré du film plastique imprimé et reste sur le chocolat.

6. Procédé selon une des revendications 1 à 5, dans lequel ledit plasma est un plasma atmosphérique.

7. Procédé selon une des revendications 1 à 6, dans lequel ledit plasma est un plasma N₂ quand le traitement par plasma diminue la tension superficielle du film plastique ; ou dans lequel ledit plasma est un plasma O₂ quand le traitement par plasma augmente la tension superficielle du film plastique.

8. Procédé selon une des revendications 1 à 7, dans lequel ledit film plastique consiste en du polyéthylène basse densité (LDPE) et/ou du téréphtalate de polyéthylène (PET).

9. Procédé selon une des revendications 1 à 8, dans lequel le traitement par plasma diminue la tension superficielle du film plastique, de préférence la diminue jusqu'à une tension superficielle de 32 mN/m maximum ; ou dans lequel le traitement par plasma augmente la tension superficielle du film plastique, de préférence l'augmente jusqu'à une tension superficielle d'au moins 46 mN/m.

10. Procédé selon une des revendications 1 à 9, dans lequel ladite encre de qualité alimentaire comprend de 15 % en poids à 65 % en poids de matières grasses et/ou d'huiles, dans lequel le rapport matière grasse/huile est d'au moins 2, de préférence au moins 4 quand le traitement par plasma diminue la tension superficielle du film plastique ; ou dans lequel le rapport matière grasse/huile est de 0,45 maximum, de préférence 0,25 maximum quand le traitement par plasma augmente la tension superficielle du film plastique.

11. Procédé selon une des revendications 1 à 10, dans lequel ladite encre de qualité alimentaire comprend de 0 % en poids à 35 % en poids d'un ou plusieurs pigments alimentaires, de préférence de 15 à 35 % en poids d'un ou plusieurs pigments alimentaires.

12. Procédé selon une des revendications 1 à 11, dans lequel ladite encre de qualité alimentaire comprend un ou plusieurs édulcorants, un ou plusieurs colorants, un ou plusieurs liants, un ou plusieurs épaississants, une ou plusieurs poudres lactées, un ou plusieurs émulsifiants et/ou un ou plusieurs solvants.

13. Procédé selon une des revendications 1 à 12, dans lequel ladite encre de qualité alimentaire a une viscosité d'au moins 200 cPs et au plus 4000 cPs et/ou a une granulométrie maximale de 50 µm.

14. Procédé selon une des revendications 1 à 13, dans lequel ladite encre de qualité alimentaire comprend un ou plusieurs acides gras, de préférence comprend au moins 10 % en poids d'un ou plusieurs acides gras.
